# EUROPÄISCHE PATENTANMELDUNG

(11) **EP 0 923 911 A1**
(43) Veröffentlichungstag der Anmeldung: **23.06.1999**
(21) Anmeldenummer: 97810990.8
(22) Anmeldetag: 17.12.1997
(51) Int. Cl.: A61C 13/00

(54) **Verfahren und Set zur Herstellung einer Unterfütterung einer Zahnprothese**

(71) Anmelder: Bonyf AG, 9490 Vaduz (LI)
(72) Erfinder: Bogaert, Jean-Pierre, Ave. de l'Annonciade 17 (MC)
(74) Vertreter: Hasler, Erich, Dr.

(57) **Zusammenfassung**

Bei einem Verfahren zur Herstellung einer Unterfütterung an einer Zahnprothese wird vor dem Auftragen des Mehrkomponenten-Unterfütterungsmaterialgemisches die Fläche, auf welche das Unterfütterungmaterial aufgetragen werden soll, mit einem schnell trocknenden Lack lackiert. Anschliessend wird das polymersierbare Unterfütterungsmaterial aufgetragen und die Zahnprothese in den Mund eingesetzt. Nach dem Aushärten der Masse entfernt man eventuell überstehendes Material. Die vorgängige Lackierung ergibt den Vorteil, dass sich die Unterfütterung später wieder gut von der Zahnprothese abziehen lässt. Ein Set (11) zur Herstellung einer Unterfütterung an einer Zahnprothese beinhaltet neben den Komponenten (13,15) zur Herstellung des Unterfütterungsmaterials eine Lacklösung (17).

## Beschreibung

Die vorliegende Erfindung betrifft ein Verfahren sowie ein Set zur Herstellung einer Unterfütterung einer Zahnprothese.

Es ist allgemein bekannt, dass die Passform und damit die Haftung von Zahnprothesen sich im Zeitablauf verschlechtern kann, insbesondere als Folge der alterungsbedingten Knochenresorption. Zu Beginn kann die sich allmählich einstellende schlechtere Haftung der Zahnprothese am Gaumen durch sogenannte Haftmittel verbessert werden. Die Haftmittel sind physiologisch unbedenkliche Klebstoffe, die - an mehreren Stellen auf der Kontaktseite der Zahnprothese aufgetragen - die Haftung der Prothese am Gaumen verbessert.

Ist der Knochenschwund, der sich seit der Anfertigung der Zahnprothese eingestellt hat, ausgeprägter, so ergeben sich Zwischenräume zwischen der Prothese und dem Gaumenbereich, sodass auch die bekannten Haftmittel der Zahnprothese keinen ausreichenden Halt mehr vermitteln können. In diesem Zustand verbleibt den Zahnprothesenträgern meist nicht viel anderes übrig, als den Zahnarzt aufzusuchen. Der Zahnarzt wird dann, wenn die Herstellung einer neuen Zahnprothese aus Kostengründen nicht in Frage kommt, die Zahnprothese mit einem sogenannten Unterfütterungsmaterial versehen, welches die entstandenen Zwischenräume ausfüllt. Die Unterfütterung bildet eine elastische, angepasste Auflage für die Zahnprothese und stellt somit den ursprünglichen Tragkomfort wieder her.

Zahnprothesenträger, welche die Kosten eines Zahnarztbesuches scheuen, können ihre Zahnprothese auch selbst mit einem Unterfütterungsmaterial versehen. In Apotheken und Drogerien sind Ausbesserungs-Sets erhältlich, welche die Komponenten zur Herstellung einer Unterfütterung und Hilfsmittel, wie Mischschale und Spatel, enthalten.

Das Unterfütterungsmaterial ist ein elastisches Material, welches durch Mischen von zwei oder mehreren, miteinander reagierenden Komponenten entsteht. Im zahnärztlichen Bereich werden solche oder ähnliche Materialien als Abdruckmassen oder Unterfütterungsmaterialien eingesetzt. Zum Aufbringen eines Unterfütterungsmaterials auf eine Zahnprothese werden die das Unterfütterungsmaterial bildenden Komponenten miteinander vermischt und sofort auf die trockenen Kontaktflächen der Zahnprothese aufgetragen. Anschliessend setzt der Patient die Zahnprothese vorsichtig in den Mund ein und presst die Zähne während einigen Minuten zusammen, bis die anfänglich zähflüssige Masse reagiert hat und in einen zähelastischen Zustand übergegangen ist. Danach kann die Zahnprothese wieder entnommen, mit Wasser abgespült und eventuell überstehendes Material entfernt werden.

Da beim extraweichen Unterfütterungsmaterial nach mehreren Wochen die Elastizität verloren geht, muss dieses von Zeit zu Zeit wieder erneuert werden. Ein dabei häufig auftretendes Problem ist, dass sich das Unterfütterungsmaterial nur sehr schwer von der Zahnprothese lösen lässt, insbesondere dann, wenn mit der Erneuerung des Unterfütterungsmaterials zulange zugewartet worden ist. Dann ist das Unterfütterungsmaterial nämlich weitgehend ausgehärtet und eine Entfernung desselben ist noch schwerer als zuvor.

Um das vorgenannte Problem zu lösen, wurde bereits versucht - allerdings ohne Erfolg -, den Ausgangsstoffen zur Herstellung des Unterfütterungsmaterials weitere Substanzen, z.B. Öle, beizumischen, um die nachträgliche Entfernung des Unterfütterungsmaterials zu erleichtern.

Es ist ein Ziel der vorliegenden Erfindung, ein Verfahren und Mittel zur Durchführung des Verfahrens zur Verfügung zu stellen, mit welchen sich das eingangs erwähnte Problem lösen lässt. Es soll insbesondere ein Verfahren bereitgestellt werden, welches von den Prothesenträgern selbst angewendet werden kann. Die Mittel zur Durchführung des Verfahrens sollen in Form eines verbesserten Sets oder Unterfütterungs-Kits zur Verfügung gestellt werden.

Erfindungsgemäss wird dies durch ein Verfahren realisiert, bei welchem vor dem Auftragen der gelier- oder polymersierbaren Masse die Kontaktseite der Zahnprothese lackiert wird. Dadurch wird erreicht, dass das Unterfütterungsmaterial, selbst wenn dieses bereits ausgehärtet ist, sich gut von der Zahnprothese entfernen lässt. Es hat sich gezeigt, dass die vorgängige Lackierung die Haftung des Unterfütterungsmaterials an der Zahnprothese nicht feststellbar beeinträchtigt, jedoch den grossen Vorteil ergibt, dass das Unterfütterungsmaterial sich einstückig oder in mehreren einzelnen Stücken von der Zahnprothese abziehen lässt. Dieses Ergebnis war überraschend und nicht voraussehbar. Obwohl die Ursachen im Detail nicht erforscht sind, so scheint es doch so zu sein, dass die Lackschicht als Trennschicht oder als eine Art Versiegelung fungiert, von welcher sich das polymere Unterfütterungsmaterial wesentlich leichter entfernen lässt als direkt vom Zahnprothesenmaterial.

Gegenstand der vorliegenden Erfindung ist auch ein Set zur Herstellung einer Unterfütterung einer Zahnprothese gemäss Oberbegriff von Anspruch 3, bei welchem wenigstens eine Lacklösung, beispielsweise ein Spray, eine Lösung, Suspension oder Emulsion, im wesentlichen mit in einem Lösungsmittel oder einem Lösungsmittelgemisch gelösten, suspendierten oder emulgierten Bindemitteln und gegebenenfalls weiteren Zusatzstoffen, zur Herstellung eines Lacks vorgesehen ist. Das Set verfügt damit über sämtliche Ausgangsstoffe, um eine Unterfütterung, die sich später wieder leicht von der Zahnprothese ablösen lässt, herzustellen. Als Bindemittel werden die wesentlichen Bestandteile eines Lacks verstanden, nämlich Filmbildner, Harze und Weichmacher. Die natürlichen, z.B. Dammarharz, oder künstlichen Harze, z.B. auf Sulfonamid-Formaldehyd-Basis, können die Filmbildung begünstigen und für die gewünschte Härte und Haftfestigkeit sorgen. Als Lacke können bekannte Lacksysteme eingesetzt werden, die nicht toxisch, d.h. im Mundbereich eingesetzt werden dürfen, und vorzugsweise schnell trocknend sind. Obwohl grundsätzlich auch chemisch trocknende Systeme eingesetzt werden können, sind physikalisch trocknende Lacksysteme bevorzugt, da diese leicht anzuwenden sind.

Vorteilhaft enthält die Lacklösung als Zusatzstoffe weitere die Filmbildung unterstützende Substanzen und gegebenenfalls Suspendierhilfen, Hautverhinderungsmittel, Verlaufmittel.

Eine besonders vorteilhafte Lacklösung enthält im wesentlichen natürliche oder künstliche Harze, Polymere, Copolymere und/oder Cellulosederivate, die in einem Lösungsmittel gelöst, emulgiert, dispergiert oder suspendiert sind. Solche Lacke können die vorerwähnten Komponenten in unterschiedlichen Verhältnissen und Zusammenstellungen erhalten. Von Bedeutung ist lediglich, dass diese einen glatten Ueberzug ergeben, welcher auf dem Zahnprothesenmaterial gut haftet und von welchem sich das Unterfütterungsmaterial gut ablösen lässt. Obwohl grundsätzliche unterschiedliche Filmbildner, wie Chlorkautschuk, Vinylpolymerisate, Acrylharze, Styrol-Butadien Copolymerisate, Polyester und Silicone, zum Einsatz kommen können, sind als Filmbildner Cellulosederivate wie Celluloseester, beispielsweise Cellusloseacetat, Cellulosebutyrat, Celluloseacetpropionat, oder Cellulosenitrat bevorzugt.

Vorteilhaft ist der Lack ein physikalisch schnell, d.h. in weniger als ungefähr 10 Minuten, vorzugsweise in weniger als 5 Minuten, trocknender Lack. In einer zweckmässigen Ausführungsform enthält der Lack im wesentlichen Cellulosenitrat und die Filmbildung unterstützende Stoffe, z.B. Polymere und/oder Copolymere, und Weichmacher. Als Weichmacher können bekannte Stoffe, z.B. Ester von mehrbasischen Säuren, beispielsweise Phtalate wie Dioctylphtalat, Acetyl-tributyl-Citrat, Triethylcitrat, Butylstearat, Dioctyladipat, Adipinsäureester, Sebacinsäureester, Campher, Phtalsäureester oder Öle wie Ricinusöl eingesetzt werden. Lacke auf Basis von Cellulosenitrat sind zulässig für die Verwendung im Mundbereich. Cellulosenitrat ist nicht toxisch und physiologisch gut verträglich. Zweckmässigerweise weist das Cellulosenitrat einen Stickstoffgehalt zwischen 10% und 14%, vorzugsweise zwischen 11.4% und 12.4% und ganz besonders bevorzugt zwischen 11.5% und 12.2% auf. Als die Filmbildung unterstützende Stoffe können Acrylat- oder Methacrylat Copolymere, Styrol/Acrylat oder Methacrylat Copolymere, Styrol/Acrylat/Acrylonitril Copolymere, Phtalsäureanhydrid/Trimellitic Anhydride/Glykol Copolymere oder ähnliche dem Fachmann bekannte die Filmbildung unterstützenden Stoffe fungieren. Diese können einzeln oder in unterschiedlichen Kombinationen miteinander vorkommen.

Gemäss einem bevorzugten Ausführungsbeispiel kann die Lacklösung Acetyl-tributyl-Citrat als Weichmacher und Stearalkonium Hectorite als Suspendierhilfe enthalten. Vorteilhaft kommen als Lösungsmittel ein Alkanol, dessen Acetat, ein Glykol, dessen Ether oder Ester, oder ein Gemisch von zwei oder mehreren der vorgenannten Lösungsmittel zum Einsatz. Die Lösungsmittel sollen in erster Linie niedersiedend sein und rasch verdunsten, sodass der gewünschte Film schnell gebildet wird. Es ist bevorzugt, dass die Ausgangsprodukte zur Herstellung des Unterfütterungsmaterials ein Acrylatpolymer, z.B. ein Ethyl-Methacrylat und Vernetzungsmittel, beispielsweise Butylphtalyl-butyl-Glykollat, enthalten.

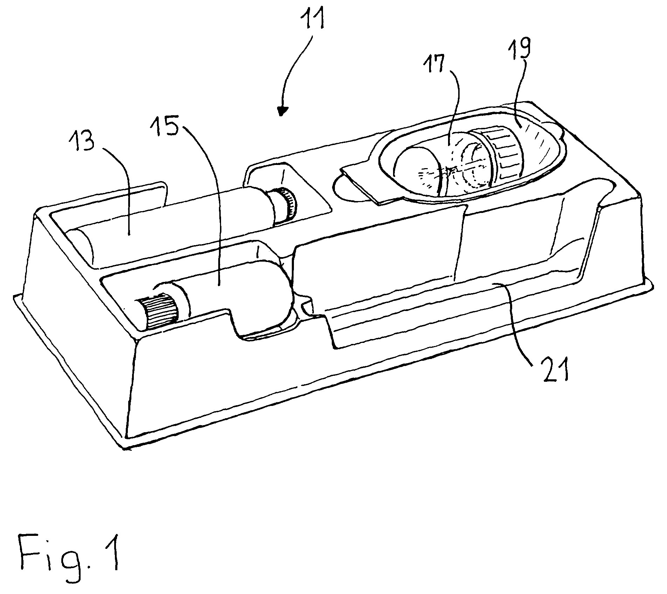

Nachfolgend wird ein Ausführungsbeispiel der Erfindung anhand der Figur 1 beschrieben, welche ein Set zur Herstellung einer Unterfütterung einer Zahnprothese in Form eines Unterfütterungs-Kits zeigt.

Das Set 11 enthält als wesentliche Bestandteile die Ausgangskomponenten 13,15 zur Herstellung des elastischen Unterfütterungsmaterials und eine Lacklösung 17. Die Ausgangskomponenten zur Herstellung des Unterfütterungsmaterials sind einerseits ein pulverförmiges Präpolymer 13 und andererseits ein mit dem Präpolymer zusammenwirkendes Vernetzungsmittel 15. Die Lacklösung 17 enthält im wesentlichen einen in einem leicht flüchtigen Lösungsmittel gelösten Lackgrundkörper und gegebenenfalls weitere die filmbildende die Filmbildung unterstützende Substanzen, Weichmacher und Suspendierhilfen. Die Lackösung 17 ist in einem Fläschen mit separatem Pinsel abgefüllt. Weiter enthält das Set 11 ein Schälchen 19, in welchem das Präpolymer 13 und Vernetzungsmittel miteinander vermischt werden können. Ein Kunststoffspatel 21 dient als Rührwerkzeug.

Die Ausgangskomponenten zur Herstellung des elastischen Unterfütterungsmaterials können in der Zusammensetzung den auch von den Zahnärzten als Zahnabdruckmassen eingesetzten, bekannten Ausgangsstoffen entsprechen. Die Ausgangskomponenten sind meist ein Präpolymer, meist ein Polyacrylat, beispielsweise Polymethylmethacrylat, Polyethylmethacrylat, und eine mit dem Präpolymer reagierenden Komponente oder Vernetzungsmittel, z.B. Methylmethacrylat, Ethylmethacrylat oder Butyl-phtalyl-butyl-Glycollate, oder andere Phatalatester zusammen mit Ethylalkohol.

In der Praxis häufig eingesetztes Unterfütterungsmaterial ist beispielsweise aus einem pulverförmigen Ethylmethacrylat-Polymer 13, welches beispielsweise noch Pigmente entalten kann, und Butyl-phtalyl-butyl-Glycollate gelöst in Ethanol hergestellt. Wird das gelöste Butyl-phtalyl-butyl-Glycollate mit dem Ethylmethacrylat-Polymer vermischt, so erstarrt das anfangs klebrige Gemisch binnen weniger Minuten zu einer elastischen Masse.

Zur Herstellung einer Lack-Trennschicht zwischen der Kontaktseite des Gebisses und dem Unterfütterungsmaterial eignen sich besonders physiologisch unbedenkliche Lacke wie beispielsweise ein in einem rasch verdunstenden Lösungsmittel oder Lösungsmittelgemisch gelöste Nitrocellulose. Ein solcher Lack kann in der Zusammensetzung einem im Handel erhältlichen Nagellack weitgehend entsprechen. Mögliche Bestandteile eines bevorzugten Lacksystem können sein: Butylacetat, Aethylacetat, Isopropylalkohol und iso-Butyl-Acetat als Lösungsmittel; Nitrocellulose, Phtalsäureanhydrid/Benzol-1,2,4 tri-Carbonsäureanhydrid (= trimellitic anhydride)/Glykol-Copolymere und Styrol/Acrylat/Acrylnitril-Copolymere als Filmbildner, Acetyl-tributylzitrat, Ester von mehrbasischen Säuren oder andere bekannte Stoffe als Weichmacher; und Stearalkonium Hectorite, Oele oder andere bekannte Stoffe als Suspendierhilfen.

## Patentansprüche

1. Verfahren zur Herstellung einer Unterfütterung einer Zahnprothese, bei welchem Verfahren eine gelier- oder polymersierbare Masse auf die Kontaktseite der Zahnprothese aufgetragen wird, anschliessend die Zahnprothese in den Mund eingesetzt wird und man die Masse während einer bestimmten Zeit aushärten lässt, und danach eventuell überstehendes Material entfernt,
**dadurch gekennzeichnet,**
dass vor dem Auftragen der gelier- oder polymersierbaren Masse die Kontaktseite der Zahnprothese lackiert wird.

2. Verfahren nach Anspruch 1, dadurch gekennzeichnet, dass die Kontaktseite der Zahnprothese mit einem Lack lackiert wird, welcher im wesentlichen in einem Lösungsmittel oder Lösungsmittelgemisch gelöste, suspendierte oder emulgierte Bindemittel, gegebenenfalls zusammen mit weiteren Zusatzstoffen, z.B. Suspendierhilfen, enthält.

3. Set zur Herstellung einer Unterfütterung einer Zahnprothese enthaltend
Ausgangsprodukte (13,15) zur Herstellung eines Unterfütterungsmaterials für Zahnprothesen oder Gebisse und gegebenenfalls Hilfsmittel wie ein Schälchen (19) und ein Spatel (21) zum Mischen und Anrühren der Ausgangsprodukte und zum anschliessenden Auftragen des Gemisches,
**dadurch gekennzeichnet,**
dass wenigstens eine Lacklösung (17), beispielsweise ein Spray, eine Lösung, Suspension oder Emulsion, im wesentlichen mit einem in einem Lösungsmittel oder Lösungsmittelgemisch gelösten, suspendierten oder emulgierten Bindemittel oder Bindemittelgemisch und gegebenenfalls weiteren Zusatzstoffen, zur Herstellung eines Lacks vorgesehen ist.

4. Set nach Anspruch 3, dadurch gekennzeichnet, dass die Lacklösung ein physikalisch trocknendes Lacksystem ist.

5. Set nach Anspruch 3 oder 4, dadurch gekennzeichnet, dass die Lacklösung als Zusatzstoffe weitere die Filmbildung unterstützende Substanzen und gegebenenfalls Suspendierhilfen, Hautverhinderungsmittel, Verlaufmittel etc. enthält.

6. Set nach einem der Ansprüche 3 bis 5, dadurch gekennzeichnet, dass die Lacklösung im wesentlichen natürliche oder künstliche Harze, Polymere, Copolymere und/oder Cellulosederivate in einem Lösungsmittel enthält.

7. Set nach einem der Ansprüche 3 bis 6, dadurch gekennzeichnet, dass die Lacklösung im wesentlichen Cellulosenitrat, die Filmbildung unterstützende Stoffe, z.B. Polymere und/oder Copolymere, und Weichmacher enthält.

8. Set nach Anspruche 7, dadurch gekennzeichnet, dass das Cellulosenitrat einen Stickstoffgehalt zwischen 10% und 14%, vorzugsweise zwischen 11.4% und 12.4% und ganz besonders bevorzugt zwischen 11.5% und 12.2% aufweist.

9. Set nach nach Anspruche 7 oder 8, dadurch gekennzeichnet, dass die Filmbildner Styrol/Acrylat Copolymere, Styrol/Acrylat/Acrylonitril Copolymere oder Phtalsäureanhydrid/Trimellitic Anhydride/Glykol Copolymere sind.

10. Set nach einem der Ansprüche 3 bis 9, dadurch gekennzeichnet, dass der Lack als Weichmacher Acetyltributyl-Citrat, Triethylcitrat, Butylstearat, Dioctyladipat, Dioctylphtalat, Adipinsäureester, Sebacinsäureester, Campher, Phtalsäureester oder Öle wie Ricinusöl und als Suspendierhilfe Stearalkonium Hectorite oder Öle enthält.

11. Set nach einem der Ansprüche 3 bis 10, dadurch gekennzeichnet, dass die Lacklösung als Lösungsmittel ein Alkanol, dessen Acetat, ein Glykol, dessen Ether oder Ester, oder ein Gemisch von zwei oder mehreren der vorgenannten Lösungsmittel verwendet.

12. Set nach einem der Ansprüche 3 bis 11, dadurch gekennzeichnet, dass die Ausgangsprodukte zur Herstellung des Unterfütterungsmaterials ein Acrylatpolymer, z.B. ein Ethyl-Methacrylat und Vernetzungsmittel, beispielsweise Butyl-phtalyl-butyl-Glykollat, enthalten.

13. Zahnprothese mit einer auf der Kontaktseite der Zahnprothese aufgebrachten Unterfütterung, dadurch gekennzeichnet, dass zwischen der Unterfütterung und der Kontaktseite eine Lackschicht vorgesehen ist.
